# EUROPÄISCHE PATENTSCHRIFT

(11) **EP 2 588 273 B1**
(45) Veröffentlichungstag und Bekanntmachung des Hinweises auf die Patenterteilung: **11.01.2017**
(21) Anmeldenummer: 10751773.2
(22) Anmeldetag: 01.07.2010
(51) Int. Cl.: B24B 39/04, B21H 1/08, B23P 9/02

(54) **MASCHINE ZUM FESTWALZEN VON RADSATZWELLEN**
MACHINE FOR DEEP-ROLLING AXLES
MACHINE SERVANT À RÉALISER UN GALETAGE DE RENFORCEMENT SUR DES AXES D'ESSIEUX

(43) Veröffentlichungstag der Anmeldung: 08.05.2013
(73) Patentinhaber: Hegenscheidt-MFD GmbH & Co. KG, 41812 Erkelenz (DE)
(72) Erfinder: HEIMANN, Alfred, 52078 Aachen (DE); HEFFE, Roland, 41352 Korschenbroich (DE)
(74) Vertreter: Patentanwälte Findeisen & Neumann
(86) Internationale Anmeldenummer: PCT/DE2010/000771
(87) Internationale Veröffentlichungsnummer: WO 2012/000463

(56) Entgegenhaltungen:
- CH-A- 130 090
- DE-C- 808 197
- DE-C- 843 822
- US-A- 3 165 814

## Beschreibung

Die Erfindung betrifft eine Maschine, insbesondere Werkzeugmaschine, zum Festwalzen von Radsatzwellen für Radsätze von Eisenbahnfahrzeugen nach dem Oberbegriff des Anspruchs 1.

Aus DE 808 197 ist eine Prägerolle zum Prägepolieren von Wellenteilen, insbesondere der Achsschenkel und Notläufe von Radsätzen bekannt. Die Arbeitsfläche der Prägerolle besteht aus einem Zylinder, an den einerseits eine große Abrundung für die große Hohlkehle des Achsschenkels und andererseits eine kleine Abrundung für die kleine Hohlkehle am Achsbund anschließt. Die Achse der Prägerolle soll während des Prägepolierens eine zur Achse des Achsschenkels schiefe Lage einnehmen und, an einer Stelle in den Achsschenkel eingedrückt, auf der Oberfläche des Achsschenkels einen lang gestreckten, tropfenförmigen Abdruck erzeugen.

Zum Zeitpunkt der Anmeldung des oben genannten Patents bezeichnete man das Festwalzen als "Prägepolieren." Seinerzeit war eine Maschine bekannt, mit deren Hilfe die beiden Achsschenkel eines Radsatzes jeweils von deren äußeren Enden her fest gewalzt werden können. Es wurden jeweils nur die Achsschenkel von fertigen Radsätzen bearbeitet. Dazu dienten zwei Paare von Festwalzrollen, die gleichzeitig jeweils an den Achsschenkeln des Radsatzes in Eingriff gebracht wurden. Der Antrieb des Radsatzes erfolgte über einen Transmissionsriemen, der um eine der beiden Radscheiben des Radsatzes geschlungen war. Mit der bekannten Maschine wurden die Achsschenkel des Radsatzes soweit verfestigt, dass sie neben einer verbesserten Oberflächengüte zugleich eine höhere Festigkeit erhielten, wodurch einerseits Heißläufer und andererseits Achsschenkelbrüche vermieden werden konnten. Durch dieses Festwalzen wurden also Eigenspannungen in die Oberfläche der Achsschenkel eingebracht, die dazu geführt haben, dass entweder keine Risse entstanden oder bereits entstandene Risse zum Stillstand gebracht werden konnten. Im Ergebnis wurde eine Erhöhung der Lebensdauer des Radsatzes erreicht.

Neben der Behandlung der Achsschenkel ist aus DE 843 822 bereits eine Vorrichtung zum Prägepolieren zylindrischer Werkstücke (zum Beispiel von Wellenteilen) bekannt. Die Vorrichtung weist eine oder mehrere Festwalzrollen auf, wobei jede Festwalzrolle in einem schwenkbaren Träger gelagert ist, dessen Schwenkachse sowohl senkrecht zur Zustellbewegung der Festwalzrolle als auch senkrecht oder annähernd senkrecht zur Werkstückachse verläuft. Mit dieser Vorrichtung sollten vorrangig zylindrische Wellen bearbeitet werden, was nicht ausschließt, dass damit auch Radsatzwellen fest gewalzt werden konnten.

In jüngster Zeit haben Schäden an Radsatzwellen von Hochgeschwindigkeitsfahrzeugen der Eisenbahn dazu geführt, der Fertigung von Radsatzwellen besondere Aufmerksamkeit zuzuwenden. Dabei soll insbesondere der Bildung von Rissen entgegen gewirkt werden.

Ausgehend von der Erkenntnis, dass durch das Einbringen von Druckeigenspannungen in die Oberfläche von Kurbelwellen das Entstehen von Rissen vermieden bzw. bereits aufgetretene Risse zum Stillstand gebracht werden können, wurden bereits verschiedene Werkzeugmaschinen geschaffen, mit denen die Radsatzwellen von Radsätzen für Eisenbahnfahrzeuge vor dem Aufpressen der Radscheiben fest gewalzt werden können. Eine Radsatzwelle zeichnet sich bekanntlich dadurch aus, dass sie mehrere aneinander angrenzende Längenabschnitte (nachfolgend Achsenzonen genannt) mit unterschiedlichen Durchmessern aufweist. Dabei soll insbesondere der Bildung von Rissen entgegen gewirkt werden.

Eine diesbezügliche Werkzeugmaschine zum Festwalzen von Radsatzwellen für Radsätze von Eisenbahnfahrzeugen ist grundsätzlich aus US 3 165 814 A bekannt. Diese Maschine hat zwei Körnerspitzen zur Aufnahme einer Radsatzwelle an jedem von ihren beiden Enden, eine Einrichtung zum Antreiben der Radsatzwelle, zwei Paar von Festwalzwerkzeugen, die in den Richtungen x, y und z der Werkzeugmaschine bewegbar sind zum Bearbeiten der Achsschenkel der Radsatzwelle sowie Spann- und Vorschubeinrichtungen für die Festwalzwerkzeuge. Die mit einer solchen Maschine mögliche Bearbeitungsvielfalt könnte an sich erhöht werden, sofern die Festwalzwerkzeuge aus mehr als zwei Paaren von Festwalzrollen bestehen.

In CH 130 090 A wird ein Festwalzwerkzeug mit drei Walzrollenpaaren beschrieben, mit denen jeweils unterschiedliche Bereiche einer Radsatzwelle bearbeitet werden können. Allerdings müssen hierfür die einzelnen Walzrollen zunächst vom Festwalzwerkzeug abgenommen werden. Aufgrund des notwendigen manuellen Rollenwechsels kann jeweils nur mit einer der Walzrollen gewalzt werden.

Aufgabe der Erfindung ist es daher, eine technische Lösung zu schaffen, mit der eine simultane Bearbeitung von unterschiedlichen Bereichen einer Radsatzwelle möglich ist.

Erfindungsgemäß wird diese Aufgabe dadurch gelöst, dass bei einer Werkzeugmaschine der genannten Art die Werkzeuge aus zweimal drei Paaren von Festwalzrollen bestehen, von denen jedes Paar zum Festwalzen von wenigstens einer Achsenzone der Radsatzwelle vorgesehen ist.

Hierbei ist vorgesehen, dass ein erstes Paar von Festwalzrollen zum Festwalzen der Achsschenkel und des Übergangs, ein zweites Paar von Festwalzrollen zum Festwalzen des Presssitzes für eine Radscheibe und ein drittes Paar von Festwalzrollen zum Festwalzen des Wellenschaftes vom Presssitz bis wenigstens zur Längsmitte der Radsatzwelle eingesetzt wird.

Vorzugsweise sind die das erste und das zweite Paar bildenden Festwalzrollen jeweils in einem gemeinsamen Gehäuse angeordnet. Dieses Gehäuse ist in der y-Richtung der Werkzeugmaschine verschiebbar. Durch die Verschiebbarkeit in y-Richtung werden die Festwalzrollen des ersten und des zweiten Paares von Festwalzrollen nacheinander in Eingriff gebracht. Zugleich ist das Gehäuse um eine B-Achse der Werkzeugmaschine schwenkbar. Die Schwenkbarkeit macht es möglich, dass die Übergänge zwischen den einzelnen Achsenzonen der Radsatzwelle bearbeitet werden können. Die Übergänge sind bekanntlich als Hohlkehlen ausgestaltet.

Das erste und das zweite Paar von Festwalzrollen haben in der z-Richtung der Werkzeugmaschine einen vorgegebenen festen axialen Abstand vom dritten Paar der Festwalzrollen. Alle drei Paare von Festwalzrollen sind schließlich auf einem gemeinsamen Schlitten angeordnet. Der gemeinsame Schlitten ist in der z-Richtung der Werkzeugmaschine, d.h., in der Vorschubrichtung verfahrbar. Insgesamt sind zwei Schlitten an der Werkzeugmaschine vorgesehen, von denen jeweils einer einem Ende der Radsatzwelle zugeordnet ist. Beim Festwalzen der Achsenzonen bewegen sich die beiden Schlitten mit Vorschubgeschwindigkeit aufeinander zu.

Schließlich ist auch noch eine Verstellbarkeit der Festwalzwerkzeuge in der x-Richtung vorhanden. Über einen Stellantrieb werden zwei, jeweils ein Paar bildende Festwalzrollen zugleich in Richtung auf die Radsatzwelle zugestellt. Insbesondere werden alle drei Paare von Festwalzrollen gleichzeitig bewegt. Über die Zustellung in der x-Richtung wird auch die Festwalzkraft eingestellt.

Nachfolgend wird die Erfindung an einem Ausführungsbeispiel näher beschrieben. Es zeigen jeweils in verkleinertem Maßstab die
- - Fig. 1: eine Hälfte einer Radsatzwelle in der Seitenansicht,
- - Fig. 2: den grundsätzlichen Aufbau einer Maschine zum Festwalzen von Radsatzwellen in perspektivischer Draufsicht,
- - Fig. 3: das Bearbeiten der in der Fig. 1 gezeigten Hälfte der Radsatzwelle mit Hilfe der Festwalzwerkzeuge,
- - Fig. 4: den Antrieb einer Radsatzwelle im Schnitt,
- - Fig. 5: den Längsschnitt durch einen Werkzeugschlitten mit drei unterschiedlichen Festwalzrollen,
- - Fig. 6: einen Werkzeugschlitten in perspektivischer Ansicht,
- - Fig. 7: einen Ausschnitt aus dem Werkzeugschlitten der Fig. 6 mit einem Paar Festwalzrollen,
- - Fig. 8: den Halter für eine einzelne Festwalzrolle
- - Fig. 9: den Halter für zwei vertikal übereinander angeordnete Festwalzrollen,
- - Fig. 10: eine erste Variante einer Bestückung mit Festwalzrollen
- - Fig. 11: eine zweite Variante einer Bestückung mit Festwalzrollen
- - Fig. 12: eine dritte Variante einer Bestückung mit Festwalzrollen

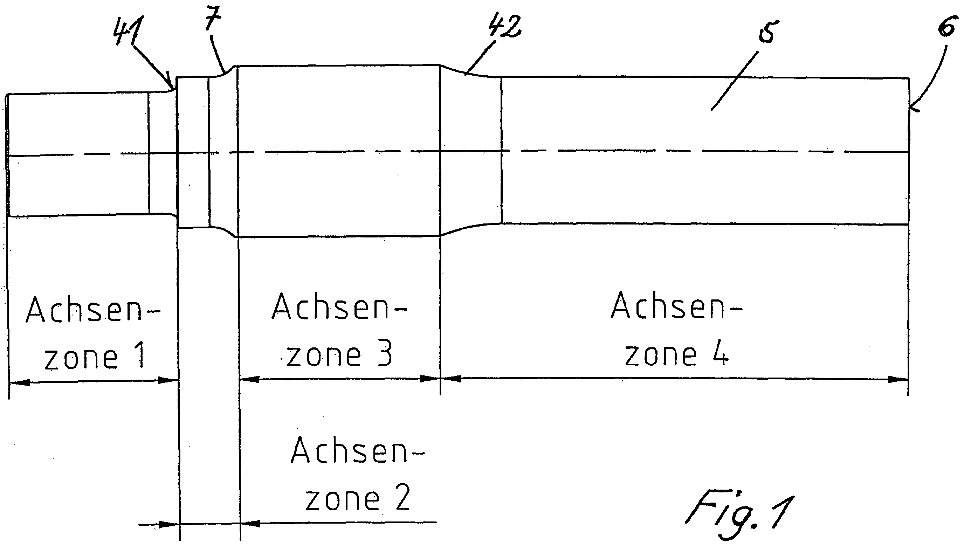

Gemäß Fig. 1 besteht die Radsatzwelle 5 eines nicht näher dargestellten Radsatzes aus mehreren Achsenzonen. Die Achsenzone 1 stellt den Achsschenkel dar, auf dem der Radsatz im Eisenbahnfahrzeug drehbar gelagert ist. Auf die Achsenzone 1 folgt in Richtung zur Längsmitte 6 der Radsatzwelle 5 die Achsenzone 2. Diese Achsenzone 2 bildet den Übergang zwischen der Achsenzone 1 und der Achsenzone 3 und wird durch eine Hohlkehle 7 gestaltet. Die Achsenzone 3 bildet den Presssitz für eine hier nicht gezeigte Radscheibe des Radsatzes. Auf die Achsenzone 3 folgt die Achsenzone 4, welche gegenüber der Achsenzone 3 einen deutlich verringerten Durchmesser hat. Die Achsenzone 4 erstreckt sich bis zur Längsmitte 6 der Radsatzwelle 5. Im weiteren Verlauf folgen in Richtung zum anderen Ende der Radsatzwelle 5 hin identische Achsenzonen 4, 3, 2 und 1, die in Fig. 1 allerdings nicht dargestellt sind.

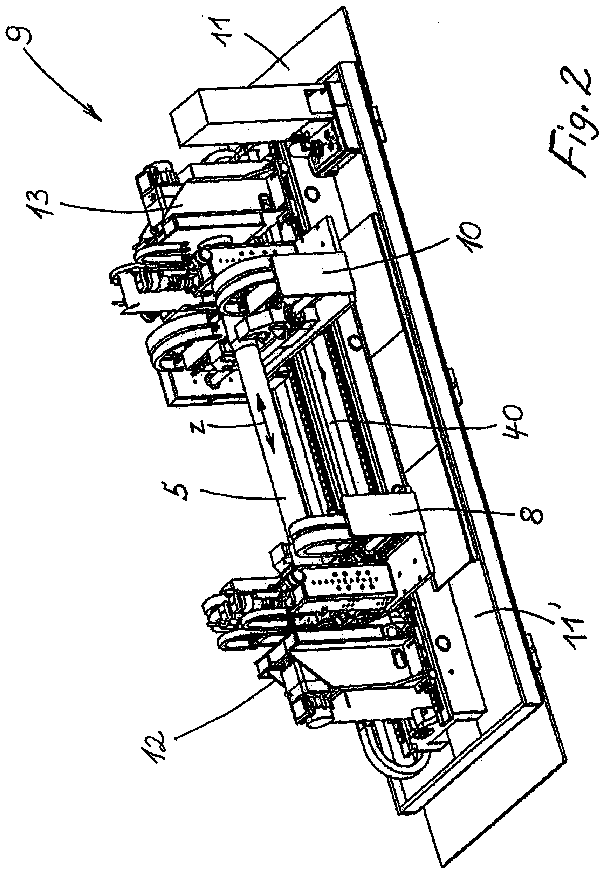

Die Achsenzonen 1 bis 4 der gezeigten Hälfte der Radsatzwelle 5 werden gemäß Fig. 2 von einem ersten Schlitten 8 der Werkzeugmaschine 9 bearbeitet, während die Achsenzonen 4 bis 1 der anderen (nicht gezeigten) Hälfte der Radsatzwelle 5 von einem zweiten Schlitten 10 der Werkzeugmaschine 9 bearbeitet werden. Dabei arbeiten die beiden Schlitten 8 und 10 jeweils ausgehend von den Achsenzonen 1 in Richtung auf die Längsmitte 6 der Radsatzwelle 5 aufeinander zu.

Aus Fig.2 ist weiterhin ersichtlich, dass auf dem Maschinenbett 11 der Werkzeugmaschine 9 ein Spindelstock 12 und ein Reitstock 13 in z-Richtung längs verschiebbar angeordnet sind. Dem Spindelstock 12 vorgelagert in z-Richtung befindet sich der erste Schlitten 8 und dem Reitstock 13 vorgelagert in z-Richtung befindet sich der zweite Schlitten 10. Die beiden Schlitten 8 und 10 sind unabhängig von ihrem jeweils zugehörigen Spindelstock 12 bzw. Reitstock 13 in z-Richtung mit Vorschubgeschwindigkeit bewegbar. Anstelle eines Reitstocks 13 kann auch ein zweiter Spindelstock vorgesehen sein, der genauso aufgebaut ist wie der gezeigte Spindelstock 12. Auf den konstruktiven Aufbau des Spindelstocks 12 wird nachfolgend noch eingegangen.

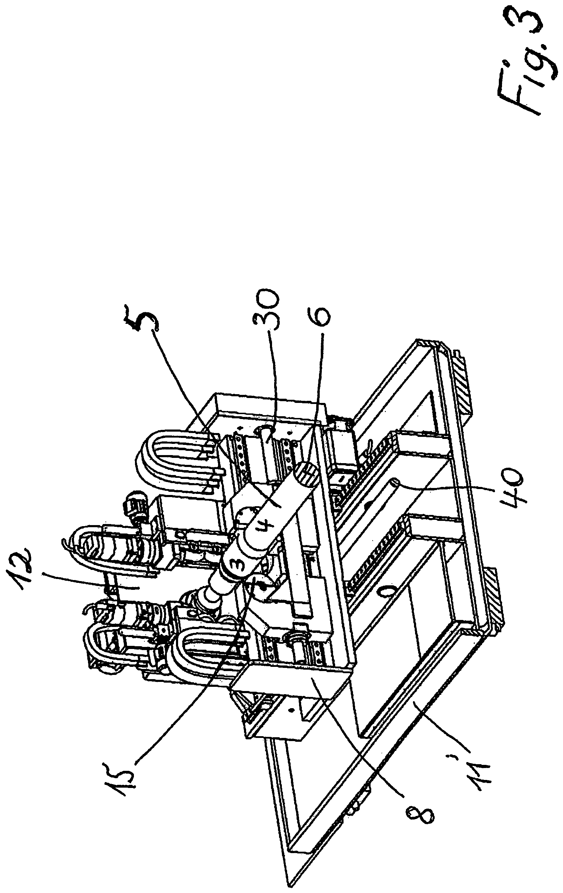

Fig. 3 zeigt die linke Hälfte 11' des Maschinenbetts 11. Eingespannt in den Spindelstock 12 erkennt man die in Fig. 1 dargestellte linke Hälfte der Radsatzwelle 5. Ebenso erkennt man den Schlitten 8 mit Festwalzrollen 14 und 15 zum Festwalzen der Achsenzonen 3 und 4.

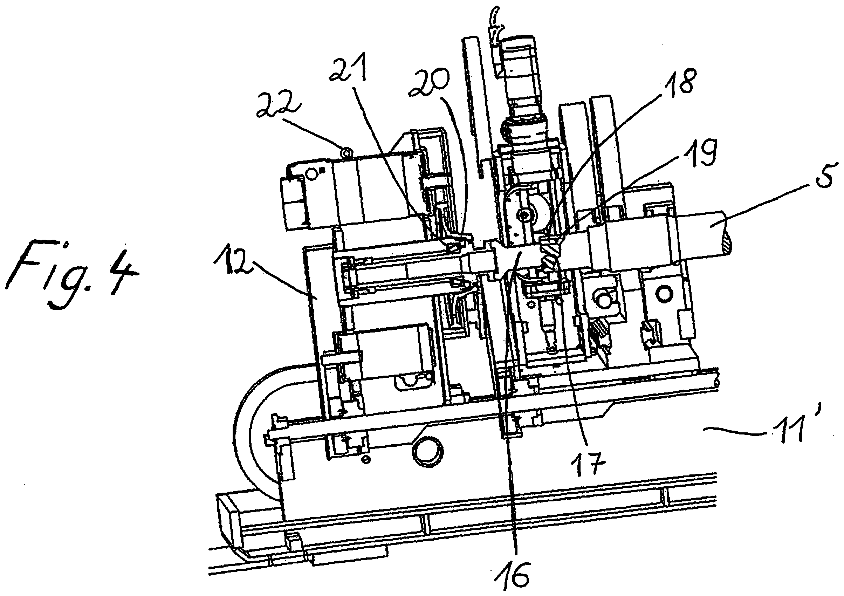

Der in Fig. 4 gezeigte Spindelstock 12 hat einen Spindelstockmitnehmer 16, der in die Zentrierbohrung 17 der Radsatzwelle 5 eingreift. Der Spindelstockmitnehmer 16 weist einen Mitnahmebolzen 18 auf, mit dem er in eine Axialbohrung 19 der Radsatzwelle 5 eingreift. Außerdem ist der Spindelstockmitnehmer 16 mit einer Riemenscheibe 20 drehfest verbunden, die über Lagerungen 21 im Spindelstock 12 drehbar gelagert ist. Über einen Riementrieb (nicht gezeigt) wird die Riemenscheibe 20 von einem Antriebsmotor 22 in Drehung versetzt und nimmt über den Spindelstockmitnehmer 16 und den in die Radsatzwelle 5 eingreifenden Mitnahmebolzen 18 die Radsatzwelle 5 mit.

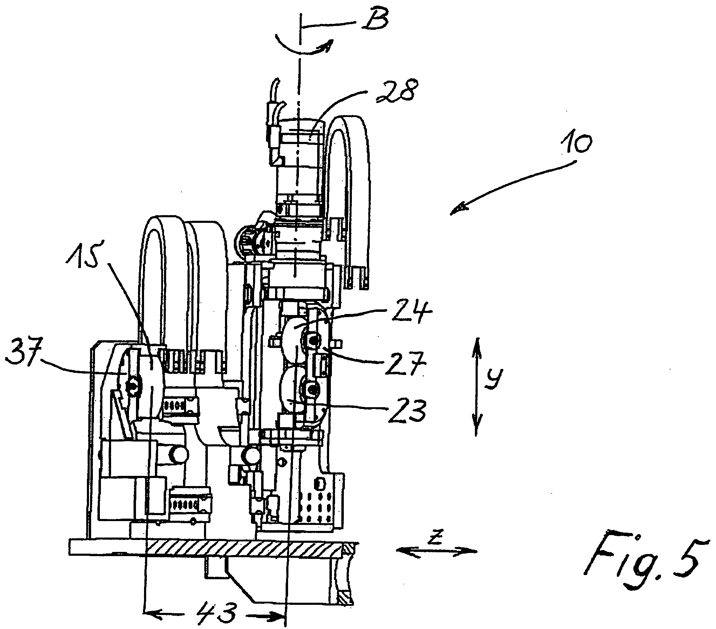

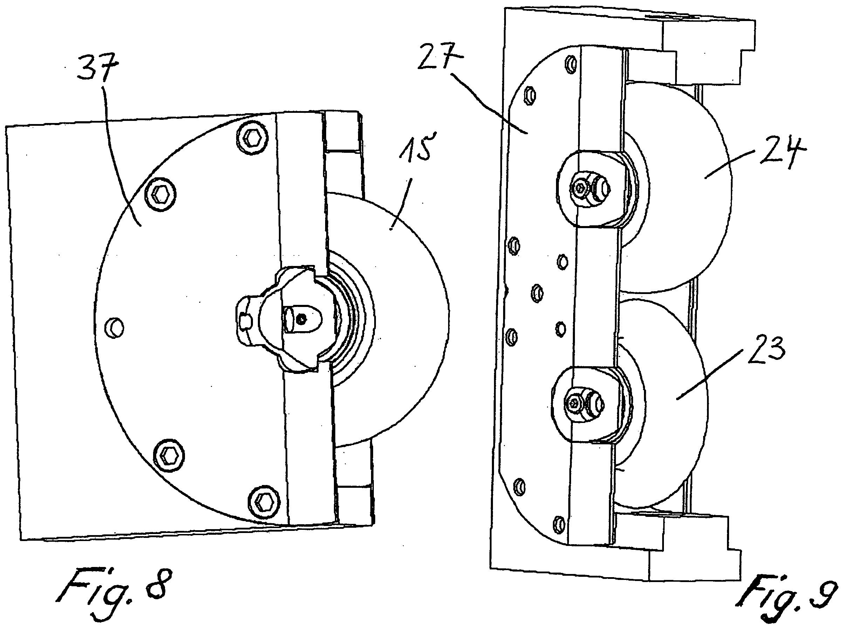

Fig. 5 zeigt einen Längsschnitt in z-Richtung durch den zweiten Schlitten 10. Man erkennt darin die beiden vertikal übereinander angeordneten Festwalzrollen 23 und 24 sowie die Festwalzrolle 15. Die beiden Festwalzrollen 23 und 24 sind hier in einem gemeinsamen Gehäuse 27 drehbar gelagert (siehe Fig. 9). Das Gehäuse 27 ist in der vertikalen y-Richtung bewegbar und die beiden Festwalzrollen 23 und 24 haben einen festen Abstand voneinander. Das Gehäuse 27 kann in y-Richtung auf und ab bewegt und außerdem um eine B-Achse geschwenkt werden. Zum Verschwenken um die B-Achse und Verschieben in y-Richtung dient eine Antriebseinheit 28. Zusammen mit ihren jeweiligen Gegenrollen 25 bzw. 26 sind die Festwalzrollen 23 und 24 dazu vorgesehen, die Achsenzonen 1 und 2 der Radsatzwelle 5 fest zu walzen.

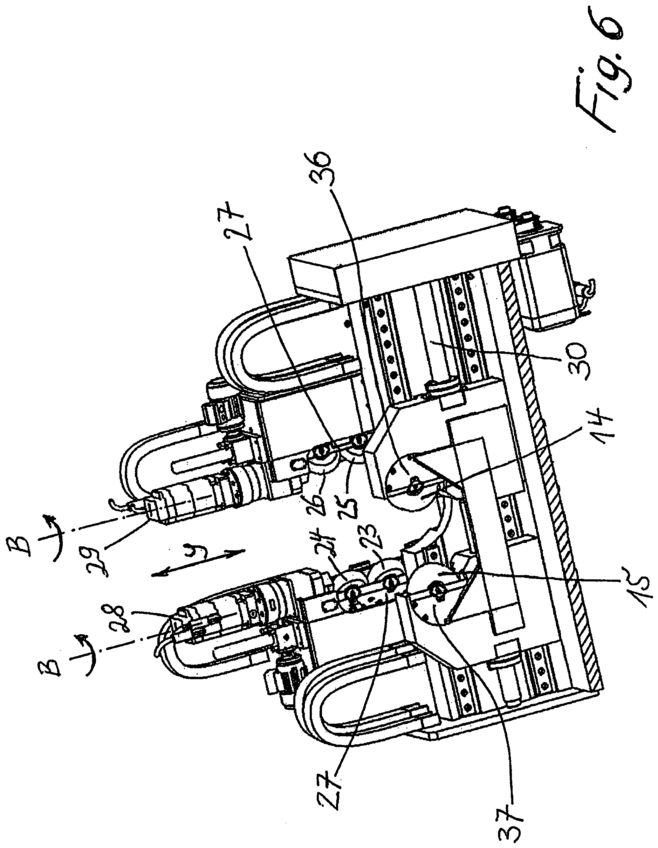

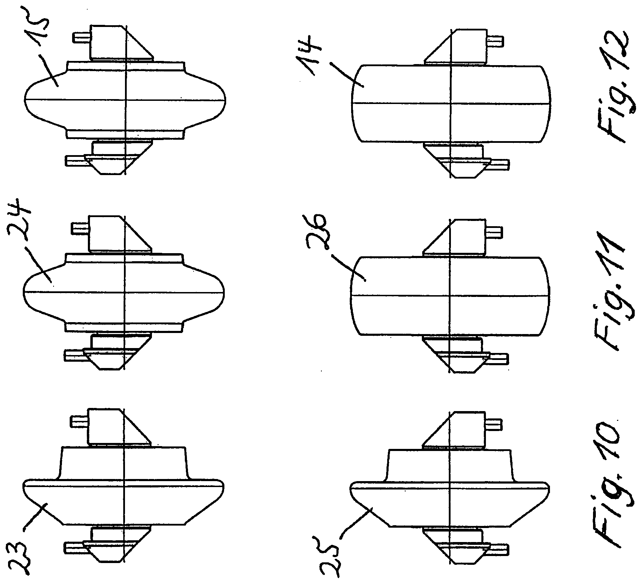

Aus Fig. 6 ist ersichtlich, dass die in einem Gehäuse 37 im Schlitten 10 drehbar gelagerte Festwalzrolle 15 (siehe Fig. 8) mit einer Gegenrolle 14 dazu vorgesehen ist, die Achsenzonen 3 und 4 einer Radsatzwelle 5 zu bearbeiten. Die Festwalzrollen 14 und 15 sowie 23 bis 26 sind jeweils nicht angetrieben, sondern werden von der angetriebenen Radsatzwelle 5 in Umdrehungen versetzt. Die Antriebseinheiten 28 und 29 dienen dazu, die Festwalzrollen 23 und 24 bzw. 25 und 26 um die B-Achsen zu verschwenken. Zwei weitere Antriebseinheiten dienen dazu, die Festwalzrollen 23, 24 bzw. 25, 26 in y-Richtung vertikal zu verschieben. Die Festwalzrollen 23; 25 bilden ein erstes Paar (Fig. 10), die Festwalzrollen 24; 26 (Fig. 11) ein zweites Paar und die Festwalzrollen 14; 15 (Fig. 12) ein drittes Paar von Festwalzrollen.

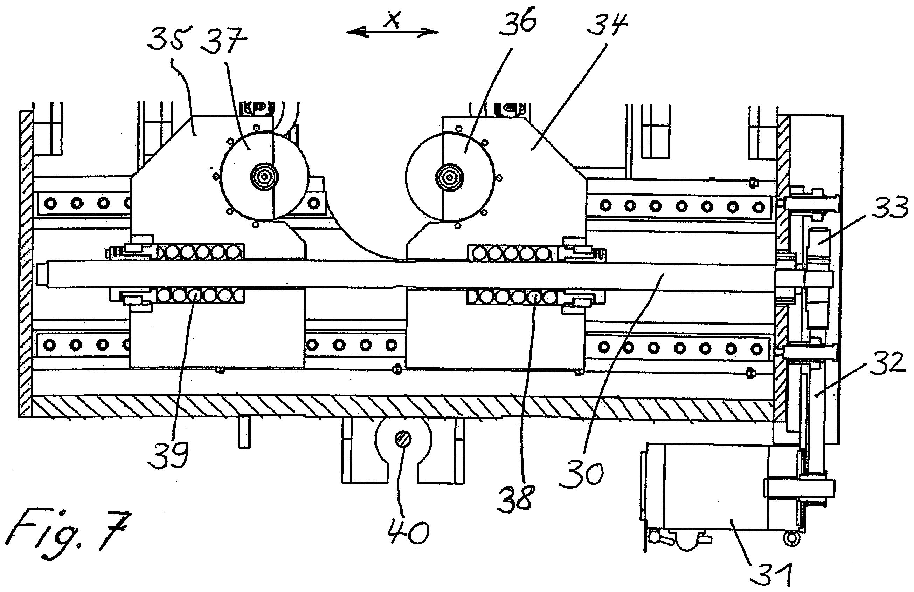

Zur Zustellung der beiden Antriebseinheiten 28 und 29 in der x-Richtung auf die Radsatzwelle 5 zu ist ein Spindelantrieb 30 vorgesehen, welcher in Fig. 7 nochmals besonders dargestellt ist. Eingeleitet wird der Spindelantrieb 30 vom Antriebsmotor 31 ausgehend über den Riementrieb 32 und 33. Die Zustellung aller Festwalzrollen 14, 15, und 23 bis 26 erfolgt in x-Richtung gleichzeitig. Dazu bewegt der Spindelantrieb 30 die beiden Träger 34 und 35 mit den Gehäusen 27, 36 und 37, worin die Festwalzrollen 23 bis 26 bzw. 14 und 15 jeweils drehbar gelagert sind, in der x-Richtung auf die Radsatzwelle 5 zu bzw. nach dem Festwalzen wieder davon weg. Gegenüber dem Spindelantrieb 30 stützen sich die beiden Träger 34 und 35 jeweils noch über Federpakete 38 und 39 ab. Durch die Federpakete 38 und 39 sind die Festwalzrollen 14, 15 sowie 23 bis 26 in der Lage, Ungleichmäßigkeiten der Rundheit und der Form der Radsatzwelle 5 in begrenztem Umfang nachzufolgen. Vorzugsweise ist der Spindeltrieb 30 in der x-Richtung, d.h., er kann sich in dieser Richtung um bis zu 5 mm innerhalb des jeweiligen Schlittens 8 bis 10 bewegen. Damit wird es möglich, eventuelle Unterschiede der Durchmesser der Festwalzrollen 14, 15 und 23 bis 26 auszugleichen, ohne dabei zusätzliche Kräfte auf das System auszuüben.

In z-Richtung der Maschine haben die Festwalzrollen 14, 15 und 23 bis 26 der beiden Schlitten 8 und 10 jeweils einen festen Abstand 43 (Fig. 5) voneinander. Das heißt, die Gehäuse 27 und die Träger 34 und 35 haben jeweils vorgegebene feste seitliche Abstände voneinander. Infolge dessen wird der Spindelantrieb 30, der in der Fig. 7 für die Bewegungen der Festwalzrollen 14 und 15 dargestellt ist, in derselben Weise auch für die Festwalzrollen 23 und 24 bzw. für deren Gegenrollen 25 und 26 wirksam. Zur Vorschubbewegung der beiden Schlitten 8 und 10 in z-Richtung der Maschine ist eine Zentralspindel 40 vorgesehen, welche sich über die Längsmitte des Bettes 11 erstreckt und von einem Antrieb (nicht gezeigt) in Umdrehung versetzt wird.

Zu Beginn der Festwalzoperation walzen die Festwalzrollen 23 und 25 die Achsenzonen 1 und 2, wobei sie zur Bearbeitung der Übergänge 7 und 41 jeweils um die B-Achse verschwenkt werden. Gleichzeitig walzen die Festwalzrollen 14 und 15 den Anfang 42 der Achsenzone 4. Nach dem Festwalzen der Achsenzonen 1 und 2 werden die Festwalzrollen 23 und 25 durch Verschieben in vertikaler (y-) Richtung außer Eingriff gebracht und die Festwalzrollen 24 und 26 gelangen in Eingriff. Die Festwalzrollen 24 und 26 walzen daraufhin die Achsenzone 3, wo sich der Presssitz zwischen der Radsatzwelle 5 und der Radscheibe befindet. Zugleich fahren die Festwalzrollen 14 und 15 fort, die Achsenzone 4 in Richtung auf die Längsmitte 6 der Radsatzwelle 5 zu bearbeiten.

## Patentansprüche

1. Maschine (9), insbesondere Werkzeugmaschine, zum Festwalzen von Radsatzwellen (5) für Radsätze von Eisenbahnfahrzeugen, mit zwei Körnerspitzen (16) zur Aufnahme einer Radsatzwellen (5) an jedem von ihren beiden Enden, einer Einrichtung (20, 22) zum Antreiben der Radsatzwelle (5), zwei Paaren von Festwalzwerkzeugen (14, 15; 23, 25; 24, 26), die in den Richtungen x, y und z der Werkzeugmaschine (9) bewegbar sind zum Bearbeiten der Achsschenkel der Radsatzwelle (5) sowie mit Spann- und Vorschubeinrichtungen r (28,29,30-33, 40) für die Festwalzwerkzeuge, wobei die Festwalzwerkzeuge (14, 15; 23, 25; 24, 26) aus mehr als zwei Paaren von Festwalzrollen bestehen,
**dadurch gekennzeichnet, dass** die Werkzeuge aus zweimal drei Paaren von Festwalzrollen (14, 15; 23, 25; 24, 26) bestehen, von denen jedes Paar zum Festwalzen von wenigstens einem einzelnen Längenabschnitt (Achsenzone 1, 2, 3, oder 4) der Radsatzwelle (5) vorgesehen ist.

2. Werkzeugmaschine nach Anspruch 1, **dadurch gekennzeichnet,**
**dass** ein erstes Paar von Festwalzrollen (23, 25) zum Festwalzen des Achsschenkels (Achsenzone 1) und des Übergangs (Achsenzone 2), dass ein zweites Paar von Festwalzrollen (24, 26) zum Festwalzen des Presssitzes (Achsenzone 3) für eine Radscheibe und dass ein drittes Paar von Festwalzrollen (14, 15) zum Festwalzen des Wellenschaftes (Achsenzone 4) vom Presssitz (Achsenzone 3) bis wenigstens zur Längsmitte (6) der Radsatzwelle (5) vorgesehen ist.

3. Werkzeugmaschine nach Anspruch 2, **dadurch gekennzeichnet,**
**dass** das erste und das zweite Paar von Festwalzrollen (23, 25; 24, 26) in der z-Richtung der Werkzeugmaschine (9) einen vorgeschriebenen axialen Abstand (43) vom dritten Paar von Festwalzrollen (14, 15) hat.

4. Werkzeugmaschine nach Anspruch 3, **dadurch gekennzeichnet,**
**dass** die drei Paare von Festwalzrollen (14, 15; 23, 25; 24, 26) auf einem gemeinsamen Schlitten (8 bzw. 10) angeordnet sind.

5. Werkzeugmaschine nach Anspruch 4, **dadurch gekennzeichnet,**
**dass** der gemeinsame Schlitten (8 bzw. 10) in der z-Richtung der Werkzeugmaschine (9) verfahrbar ist.

6. Werkzeugmaschine nach Anspruch 5, **dadurch gekennzeichnet,**
**dass** zwei gemeinsame Schlitten (8, 10) vorgesehen sind, von denen jeweils einer einem Ende der Radsatzwelle (5) zugeordnet ist.

## Claims

1. Machine (9), in particular a machine tool, for the deep rolling of wheelset shafts (5) for wheelsets of railway vehicles, with two prick punch points (16) for picking up a wheelset shaft (5) at each of its two ends, a device (20, 22) for driving the wheelset shaft (5), two pairs of deep rolling tools (14; 15; 23; 25; 24; 26) which can be moved in the directions x, y and z of the machine tool (9) for machining the axle journal of the wheelset shaft (5), and with clamping and feed devices (28; 29; 30-33; 40) for the deep rolling tools, whereby the deep rolling tools (14; 15; 23; 25; 24; 26) consist of more than two pairs of work rollers, **characterised in that** the tools consist of twice three pairs of work rollers (14, 15; 23, 25; 24, 26), of which each pair is provided for the deep rolling of at least one individual longitudinal section (axle zone 1, 2, 3, or 4) of the wheelset shaft (5).

2. Machine tool according to claim 1, **characterised in**
**that** a first pair of work rollers (23, 25) is provided for the deep rolling of the axle journal (axle zone 1) and the transition (axle zone 2),
**that** a second pair of work rollers (24, 26) is provided for the deep rolling of the press fit (axle zone 3) for a wheel disc and
**that** a third pair of work rollers (14, 15) is provided for the deep rolling of the stub shaft (axle zone 4) of the press fit (axle zone 3) at least as far as the longitudinal middle (6) of the wheelset shaft (5).

3. Tool machine according to claim 2, **characterised by** the fact
that the first and the second pair of work rollers (23, 25; 24, 26) in the z-direction of the machine tool (9) has a prescribed axial clearance (43) from the third pair of work rollers (14, 15).

4. Machine tool according to claim 1, **characterised in**
**that** the three pairs of work rollers (14, 15; 23, 25; 24, 26) are arranged on a joint slide (8 and 10).

5. Machine tool according to claim 4, **characterised in**
**that** the joint slide (8 and 10) can be moved in the z-direction of the machine tool (9).

6. Machine tool according to claim 4, **characterised in**
**that** two joint slides (8, 10) are provided, one of which in each case is allocated to one end of the wheelset shaft (5).

## Revendications

1. Machine (9), en particulier machine-outil, servant à réaliser un galetage de renforcement sur des axes d'essieu monté (5) pour des essieux montés de véhicules ferroviaires, avec deux pointes de pointeau (16) destinées à recevoir un axe d'essieu monté (5) à chacune de ses deux extrémités, un dispositif (20, 22) d'entraînement de l'axe d'essieu monté (5), deux paires d'outils de galetage (14 ; 15 ; 23 ; 25 ; 24 ; 26), mobiles dans les sens x, y et z de la machine-outil (9), destinées à usiner les fusées d'axe de l'axe d'essieu monté (5) ainsi qu'avec des dispositifs de serrage et d'avance (28 ; 29 ; 30-33 ; 40) pour les outils de galetage, les outils de galetage (14 ; 15 ; 23 ; 25 ; 24 ; 26) consistant en plus de deux paires de galets de galetage, **caractérisée en ce que** les outils consistent en deux fois trois paires de galets de galetage (14, 15 ; 23, 25 ; 24, 26) dont chaque paire est prévue pour galeter au moins un tronçon de longueur individuel (zone d'axe 1, 2, 3, ou 4) de l'axe d'essieu monté (5).

2. Machine-outil selon revendication 1, **caractérisée en ce**
**qu'**une première paire de galets de galetage (23, 25) est prévue pour le galetage de la fusée d'axe (zone d'axe 1) et de la transition (zone d'axe 2),
**qu'**une deuxième paire de galets de galetage (24, 26) est prévue pour le galetage de l'ajustement serré (zone d'axe 3) pour un disque de roue et
**qu'**une troisième paire de galets de galetage (14, 15) est prévue pour le galetage de la tige d'axe (zone d'axe 4) de l'ajustement serré (zone d'axe 3) au moins jusqu'à la moitié de la longueur (6) de l'axe d'essieu monté (5).

3. Machine-outil selon revendication 2, **caractérisée en ce**
**que** la première et la deuxième paire de galets de galetage (23, 25 ; 24, 26) dans le sens z de la machine-outil (9) sont à une distance axiale prescrite (43) de la troisième paire de galets de galetage (14, 15).

4. Machine-outil selon revendication 1, **caractérisée en ce**
**que** les trois paires de galets de galetage (14, 15 ; 23, 25 ; 24, 26) sont disposées sur une coulisse (8 et/ou 10) commune.

5. Machine-outil selon revendication 4, **caractérisée en ce**
**que** la coulisse (8 et/ou 10) commune est mobile dans le sens z de la machine-outil (9).

6. Machine-outil selon revendication 4, **caractérisée en ce**
**que** deux coulisses (8 et/ou 10) communes sont prévues dont une est respectivement affectée à une extrémité de l'axe d'essieu monté (5).
